# EUROPÄISCHE PATENTSCHRIFT

(11) **EP 2 976 721 B1**
(45) Veröffentlichungstag und Bekanntmachung des Hinweises auf die Patenterteilung: **03.05.2017**
(21) Anmeldenummer: 13711675.2
(22) Anmeldetag: 22.03.2013
(51) Int. Cl.: G06F 17/27, B07C 3/14

(54) **IDENTIFIKATION VON PACKSTÜCKEN**
IDENTIFICATION OF PACKAGED ITEMS
IDENTIFICATION DE PAQUETS

(43) Veröffentlichungstag der Anmeldung: 27.01.2016
(73) Patentinhaber: Deutsche Post AG, 53113 Bonn (DE)
(72) Erfinder: HARTMANN, Bernd, 53501 Grafschaft (DE)
(74) Vertreter: Cohausz & Florack
(86) Internationale Anmeldenummer: PCT/EP2013/056046
(87) Internationale Veröffentlichungsnummer: WO 2014/146718

(56) Entgegenhaltungen:
- EP-A1- 0 589 118
- EP-A2- 0 621 542
- DE-A1- 10 126 835
- US-B1- 6 272 456

## Beschreibung

### Gebiet der Erfindung

Die vorliegende Erfindung betrifft unter anderem ein Verfahren, eine Vorrichtung, ein System, ein Programm und ein Speichermedium zum Identifizieren von Packstücken.

### Hintergrund der Erfindung

Ein Packstück kann beispielsweise ein Brief, ein Päckchen, ein Paket oder eine beliebige andere von einem Logistikdienstleister zu befördernde Sendung sein. Die zunehmende Individualisierung von Serviceleistungen im Zusammenhang mit der Beförderung von Packstücken erfordert flexible Fähigkeiten bezüglich der Zustellung und Abholung. Die Möglichkeit, Packstücke zu identifizieren, kann dabei die Erbringung von gewünschten Dienstleistungen erleichtern. Hierbei kann es sich um von einem Absender und/oder von einem Empfänger gewünschte Dienstleistungen handeln. Die Packstückidentifikation spielt daher eine zentrale Rolle in der Logistik.

Eine Identifikation von Packstücken erfolgt heutzutage gewöhnlich mittels Barcodes, die über einen Scanner oder eine Kamera erfasst werden. DE 101 26 835 A1, veröffentlicht am 12. Dezember 2002 (2001-12-12), beschreibt ein Verfahren zur Erkennung von Merkmalswerten anhand der Abtastung der Oberfläche eines Packstücks.

### Allgemeine Beschreibung einiger beispielhafter Ausführungsformen der Erfindung

Die Erfindung basiert auf der Überlegung, dass die Aufbringung von Barcodes einen zusätzlichen Arbeitsschritt erfordert und dass die Barcodes für eine zuverlässige Auswertung mit einer ausreichenden Qualität auf ein Packstück aufgebracht werden müssen. Die Erfindung basiert ferner auf der Überlegung, dass Barcodes nicht weltweit genormt sind. Sie können sich von einem Logistikdienstleister zum anderen und/oder von einem Land zum anderen unterscheiden. Somit können insbesondere auch grenzüberschreitende Dienstleistungen erschwert werden.
Der Erfindung liegt die Aufgabe zugrunde, eine andere Identifikationsmöglichkeit für Packstücke bereitzustellen.
Die Aufgabe wird gelöst durch ein Verfahren gemäß Anspruch 1, eine Vorrichtung gemäß Anspruch 9, ein System gemäß Anspruch 11, ein Programm gemäß Anspruch 12 und ein Speichermedium gemäß Anspruch 13. Weitere Ausführungsformen sind den abhängigen Ansprüchen zu entnehmen.

Ein beispielhaftes erfindungsgemäßes Verfahren umfasst, ausgeführt von mindestens einer Vorrichtung, ein Erhalten von Daten, die aus einer optischen Erfassung mindestens einer Oberfläche eines Packstücks resultieren, ein Durchführen einer Texterkennung basierend auf den erhaltenen Daten zum Erkennen von einzelnen Zeichen, ein Ermitteln einer Mehrzahl von Merkmalswerten als mindestens einen Teil einer Identifikation des Packstücks, wobei jeder Merkmalswert auf einer anderen vorgegebenen statistische Auswertung der erkannten Zeichen basiert, und ein Bereistellen der Merkmalswerte zum Speichern der Merkmalswerte und/oder zum Vergleichen der Merkmalswerte mit zuvor gespeicherten Merkmalswerten.

Eine beispielhafte erfindungsgemäße Vorrichtung umfasst Mittel zur Ausführung des erfindungsgemäßen Verfahrens. Die Vorrichtung kann ein mobiles Gerät oder ein stationäres Gerät sein. Sie kann beispielsweise ein Teil einer Anlage, ein lokal genutzter Computer oder ein Server sein. Die Vorrichtung kann auch ein Modul für ein Gerät sein.

Eine beispielhafte erfindungsgemäße Vorrichtung umfasst zumindest einen Prozessor und zumindest einen Speicher, wobei in dem Speicher ein Programmanweisungen umfassendes Programm gespeichert ist, und wobei der Speicher und das Programm eingerichtet sind, um, mit dem Prozessor, die Vorrichtung zumindest zu veranlassen, das erfindungsgemäße Verfahren auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor können unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher, auf den der Prozessor zugreifen kann. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellem Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Ein beispielhaftes erfindungsgemäßes System umfasst mindestens eine erfindungsgemäße Vorrichtung und mindestens einen Scanner zur optischen Erfassung einer Oberfläche von Packstücken und/oder mindestens eine Kamera zur optischen Erfassung einer Oberfläche von Packstücken. Das System kann zusätzlich einen Speicher umfassen, in dem ermittelte Merkmalswerte gespeichert werden. Der Speicher kann beispielsweise Teil eines Servers sein oder von einem Server adressierbar sein.

Ein beispielhaftes erfindungsgemäßes Programm umfasst Programmanweisungen, wobei die Programmanweisungen eine Vorrichtung zur Ausführung des erfindungsgemäßen Verfahrens veranlassen, wenn das Programm von dem Prozessor ausgeführt wird. Ein Programm ist beispielsweise über ein Netz wie ein lokales Netz, ein Weitverkehrsnetz, ein virtuelles Netz, ein Funknetz, wie ein Mobilfunknetz, ein sonstiges Telefonnetz und/oder das Internet verteilbar. Ein Programm kann zumindest teilweise Software und/oder Firmware eines Prozessors sein. Das erfindungsgemäße Programm kann zum Beispiel in einem Speicher der erfindungsgemäßen Vorrichtung gespeichert sein. Es versteht sich, dass unter dem Begriff Programm jeweils auch eine Zusammenstellung mehrerer Programme verstanden werden kann.

Ein beispielhaftes erfindungsgemäßes Speichermedium speichert das erfindungsgemäße Programm. Das Speichermedium ist beispielsweise ein computerlesbares Speichermedium, welches das erfindungsgemäße Programm enthält und zum Beispiel als magnetisches, elektrisches, elektromagnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

Packstücke unterschieden sich durch schriftliche, kundenbezogene Informationen, wie Absender, Empfänger und weitere Aufschriften, auf dem Packstück. Die verwendete Schrift setzt sich dabei aus verschiedenen Zeichen zusammen.

Die Erfindung sieht daher für bestimmte beispielhafte Ausführungsformen vor, dass Text auf einem Packstück optisch erfasst, erkannt und statistisch analysiert wird. Es werden mehrere Merkmale des Textes bestimmt. Jeder Merkmalswert basiert auf einer anderen statistischen Auswertung der erkannten Zeichen des Textes. Die statistischen Auswertungen können so vorgegeben werden, dass verschiedene Texte im Allgemeinen in verschiedenen Merkmalswerten resultieren. Die Gesamtheit der Merkmalswerte für ein Packstück erlaubt es somit, das Packstück zumindest von vielen anderen Packstücken zu unterscheiden. Die Gesamtheit der Merkmalswerte kann zumindest als ein Teil einer Identifikation für ein Packstück genutzt werden. Die Merkmalswerte können zum Speichern bereitgestellt werden. Alternativ oder zusätzlich können die Merkmalswerte für einen Vergleich mit zuvor gespeicherten Merkmalswerten bereitgestellt werden.

Ein möglicher Vorteil der Erfindung liegt darin, dass eine Alternative oder Ergänzung zu einer Identifikation von Packstücken mittels Barcode bereitgestellt wird. Hierdurch wird ein flexibler Umgang mit Packstücken ermöglicht, der unabhängig von bestimmten Logistikdienstleistern ist. Ein weiterer möglicher Vorteil der Erfindung liegt darin, dass sich durch die Auswertung des Textes auf einem Packstück auch Veränderungen in diesem Text über der Zeit erfassen lassen. Im Vergleich zu der Nutzung der vollständigen Daten aus einer optischen Erfassung einer Oberfläche oder aus einer Texterkennung für eine Identifikation erlaubt die Verwendung von Merkmalswerten, die auf statistischen Auswertungen von Text auf Packstücken basieren, eine Identifizierung mit einer relativ kleinen Datenmenge. Eine geringe Datenmenge benötigt relativ wenig Speicherplatz zum Speichern und erlaubt ein relativ schnelles Vergleichen von neu erfassten Daten mit gespeicherten Daten. Dies wiederum begrenzt den Bedarf an Prozessorleistung und Energie.

Ein Zeichen kann ein beliebiger eigenständiger Teil eines Textes sein, wie ein Buchstabe verschiedener Alphabete, eine Ziffer verschiedener Zahlschriften, ein Satzzeichen inklusive Sonderzeichen, eine Silbe einer Silbenschrift oder ein Logogramm, usw.

In einer beispielhaften Ausführungsform umfasst die mindestens eine der statistischen Auswertungen eine Bestimmung einer Häufigkeit eines bestimmten Zeichens, eine Bestimmung einer Häufigkeit einer bestimmten Kombination von Zeichen, und/oder eine Bestimmung einer Häufigkeit eines bestimmten Zeichens an einer bestimmten Stelle. Andere statistische Auswertungen sind ebenso möglich.

Die Häufigkeit kann dabei eine absolute Häufigkeit oder eine relative Häufigkeit sein. Die relative Häufigkeit kann dabei beispielsweise eine Anzahl im Verhältnis zur Anzahl aller erkannten Zeichen oder bestimmter erkannter Zeichen sein. Im Rahmen einer statistischen Auswertung kann eine ermittelte relative Häufigkeit auch ins Verhältnis gesetzt werden zu einer zu erwartenden relativen Häufigkeit. Das Ergebnis könnte dann als Merkmalswert verwendet werden.

Die vorgegebenen statistischen Auswertungen der erkannten Zeichen können zum Beispiel so gewählt werden, dass die sich ergebenden Merkmalswerte besonders geeignet sind, um Texte auf Packstücken voneinander zu unterscheiden.

In einer beispielhaften Ausführungsform wird hierzu mindestens eine der vorgegebenen statistischen Auswertungen der erkannten Zeichen basierend auf mindestens einem der folgenden Kriterien ausgewählt: einer Wahrscheinlichkeit eines Auftretens eines bestimmten Zeichens, einer Wahrscheinlichkeit eines Auftretens einer bestimmten Kombination von Zeichen, und einer Wahrscheinlichkeit eines Auftretens eines bestimmten Zeichens an einer bestimmten Stelle.

Die jeweilige Wahrscheinlichkeit könnte zum Beispiel mittels statistischer Analysen einer bestimmten Sprache oder einer bestimmten Gruppe von Sprachen ermittelt werden. Sie könnte aber auch mittels statistischer Analysen ausgewählter Bereiche einer Sprache oder Sprachgruppe ermittelt werden, etwa basierend auf einer umfangreichen, repräsentativen Anzahl von Namen und Adressen.

Tritt ein bestimmtes Zeichen oder eine bestimmte Zeichenkombination sehr selten und damit mit geringer Wahrscheinlichkeit auf, beispielsweise die Zeichenkombination "xq" im Deutschen, so wäre ein Merkmalswert, der die Häufigkeit dieser Zeichenkombination angibt, wenig geeignet, Packstücke voneinander zu unterscheiden, denn für praktisch jedes Packstück würde hier ein Merkmalswert von "Null" ermittelt. Tritt ein bestimmtes Zeichen oder eine bestimmte Zeichenkombination dagegen mit einer sehr hohen Wahrscheinlichkeit auf, wie beispielsweise das "e" im Deutschen, so lässt sich mit der Häufigkeit dieses Zeichens in einem erkannten Text auf einem Packstück das Packstück bereits von einer großen Anzahl anderer Packstücke unterscheiden.

Daher kann in beispielhaften Ausführungsformen eine der statistischen Auswertungen der erkannten Zeichen so gewählt werden, dass als ein Merkmalswert die Häufigkeit eines bestimmten Zeichens bestimmt wird, das mit einer besonders hohen Wahrscheinlichkeit auftritt. Alternativ oder zusätzlich kann entsprechend in beispielhaften Ausführungsformen eine der statistischen Auswertungen der erkannten Zeichen so gewählt werden, dass die Häufigkeit einer bestimmten Zeichenkombination oder einer bestimmten Zeichenstellung, usw., bestimmt wird, die mit einer besonders hohen Wahrscheinlichkeit auftritt.

Je nach Kulturkreis variieren die statistischen Zusammenhänge zwischen den Zeichen eines Textes. Diese spezifischen Zusammenhänge können genutzt werden, um als selektive Merkmalsträger zur Identifikation von Packstücken beizutragen.

In einer beispielhaften Ausführungsform sind daher für verschiedene Sprachen oder Sprachgruppen unterschiedliche statistische Auswertungen erkannter Zeichen vorgegeben, wobei die vorgegebenen statistischen Auswertungen der erkannten Zeichen für eine jeweilige Sprache oder Sprachgruppe basierend auf statistischen Analysen der Sprache oder Sprachgruppe ausgewählt werden. Die Mehrzahl von Merkmalswerten kann dann jeweils basierend auf statistischen Auswertungen der erkannten Zeichen, die für eine bestimmte Sprache oder Sprachgruppe vorgegeben sind, ermittelt werden.

Dies kann den Vorteil bieten, dass für eine weitgehende Identifikation eines Packstücks eine geringere Anzahl von Merkmalen genutzt werden kann als mit einer Mehrzahl von Merkmalen für viele Sprachen. So treten beispielsweise in einer Schrift mit lateinischen Buchstaben keine japanischen Silbenzeichen auf, und die Berücksichtigung von statistischen Auswertungen bezüglich japanischer Silbenzeichen würde zur Unterscheidung von mit lateinischer Schrift versehenen Packstücken nicht beitragen.

In einer beispielhaften Ausführungsform könnte ein eigener, zusätzlicher Merkmalswert zur Angabe der jeweils berücksichtigten Sprache oder Sprachgruppe vorgesehen werden.

Die zu berücksichtigende Sprache oder Sprachgruppe kann fest vorgegeben sein, individuell vorgegeben werden, oder im Rahmen des erfindungsgemäßen Verfahrens bestimmt werden. In einer beispielhaften Ausführungsform wird die Sprache basierend auf einer geometrischen Verteilung bestimmter erkannter Zeichen bestimmt. So kann beispielsweise die Anordnung von Zahlen an einer bestimmten Stelle, wie einer Postleitzahl oder einer Hausnummer, einen Hinweis auf die Sprache liefern. In einer anderen beispielhaften Ausführungsform wird die Sprache zusätzlich oder alternativ basierend auf einer Präsenz bestimmter Zeichen bestimmt. So kommen bestimmte Zeichen nur in bestimmten Sprachen vor. In einer weiteren beispielhaften Ausführungsform wird die Sprache zusätzlich oder alternativ basierend auf einer Information über den Herkunftsort des Packstücks bestimmt.

Liegt eine Information über die Sprache bereits vor der Texterkennung vor, so kann diese Information auch für die Durchführung der Texterkennung genutzt werden.

In einer beispielhaften Ausführungsform umfasst das Verfahren die vorangehende optische Erfassung der mindestens einen Oberfläche des Packstücks.

In einer beispielhaften Ausführungsform umfasst die optische Erfassung ein Scannen der mindestens einen Oberfläche des Packstücks oder ein Fotografieren der mindestens einen Oberfläche des Packstücks. Die optische Erfassung kann dabei von der gleichen Vorrichtung durchgeführt werden, die die Merkmalswerte bestimmt, oder von einer anderen Vorrichtung.

In einer beispielhaften Ausführungsform umfasst das Verfahren ein Vergleichen der ermittelten Merkmalswerte mit zuvor gespeicherten Merkmalswerten. Für den Vergleich können ermittelte Merkmalswerte mit gespeicherten Merkmalswerten korreliert werden, um eine Übereinstimmung und/oder Abweichungen festzustellen. Das Vergleichen kann dabei von der gleichen Vorrichtung durchgeführt werden, die die Merkmalswerte bestimmt, oder von einer anderen Vorrichtung.

Eine Übereinstimmung der aktuellen Merkmalswerte mit gespeicherten Merkmalswerten ist ein Hinweis darauf, dass ein vorliegendes Packstück das gleiche ist, wie ein zu einem frühren Zeitpunkt erfasstes Packstück, für das Merkmalswerte erzeugt und gespeichert wurden. Eine geringfügige Abweichung der aktuellen Merkmalswerte mit gespeicherten Merkmalswerten ist ein Hinweis darauf, dass ein vorliegendes Packstück das gleiche ist, wie ein zu einem frühren Zeitpunkt erfasstes Packstück, wobei allerdings in der Zwischenzeit eine Änderung oder Manipulation der Beschriftung erfolgt sein kann. Ein solches Ergebnis kann also ein Anlass für weitere automatische oder manuelle Untersuchungen sein.

Erzeugte Merkmalswerte für ein Packstück können in der Vorrichtung gespeichert werden, die die Merkmalswerte bestimmt. Zusätzlich oder alternativ können sie aber auch in einer anderen Vorrichtung gespeichert werden.

In einer beispielhaften Ausführungsform umfasst die erfindungsgemäße Vorrichtung mindestens einen Prozessor und/oder mindestens einen Speicher und/oder mindestens eine Schnittstelle für eine Datenkommunikation und/oder mindestens einen Scanner und/oder mindestens eine Kamera. Der mindestens eine Speicher kann genutzt werden, um Programme, Programmteile, Zwischenergebnisse, Merkmalswerte und/oder andere Daten zu speichern. Ein Scanner oder eine Kamera können für die optische Erfassung der mindestens einen Oberfläche des Packstücks genutzt werden. Umfasst die Vorrichtung selber keine Kamera und keinen Scanner, so kann eine Schnittstelle für eine Datenkommunikation dazu verwendet werden, um Daten von einer Kamera oder von einem Scanner zu empfangen. Eine Schnittstelle für eine Datenkommunikation kann ferner dazu verwendet werden, um erzeugte Merkmalswerte und/oder Ergebnisse von Auswertungen basierend auf den erzeugten Merkmalswerten an eine andere Vorrichtung zu übermitteln. Eine solche andere Vorrichtung kann beispielsweise ein Server sein, der Merkmalswerte von verschiedenen Vorrichtungen erhält, speichert und bei Bedarf bereitstellt. Eine Schnittstelle für eine Datenkommunikation kann eine Schnittstelle für eine kabelgebundene Verbindung oder für eine drahtlose Verbindung sein. Eine kabelgebundene Verbindung kann beispielsweise eine direkte Verbindung zu einer anderen Vorrichtung, eine Verbindung in ein lokales Netz (local area network, LAN), oder eine Verbindung in ein öffentliches Netz, wie das Internet sein. Eine drahtlose Verbindung kann beispielsweise eine Verbindung in ein lokales Funknetz (Wireless Local Area Network, WLAN), eine direkte drahtlose Verbindung zu einer anderen Vorrichtung, wie eine Bluetooth-Verbindung, oder eine Verbindung in ein Mobilfunknetz sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigt:
- Fig. 1: ein Blockdiagramm einer erste beispielhaften Ausführungsform eines erfindungsgemäßen Systems mit einer ersten beispielhaften Ausführungsform einer erfindungsgemäßen Vorrichtung;
- Fig. 2: ein Ablaufdiagramme mit Verfahrensschritten einer beispielhaften Ausführungsform des erfindungsgemäßen Verfahrens;
- Fig. 3: ein Blockdiagramm einer zweiten beispielhaften Ausführungsform eines erfindungsgemäßen Systems mit einer zweiten beispielhaften Ausführungsform einer erfindungsgemäßen Vorrichtung; und
- Fig. 4: ein Blockdiagramm einer dritten beispielhaften Ausführungsform eines erfindungsgemäßen Systems mit einer dritten beispielhaften Ausführungsform einer erfindungsgemäßen Vorrichtung.

### Detaillierte Beschreibung einiger beispielhafter Ausführungsformen der Erfindung

Die vorliegende Erfindung wird im Folgenden anhand von beispielhaften Ausführungsformen beschrieben.

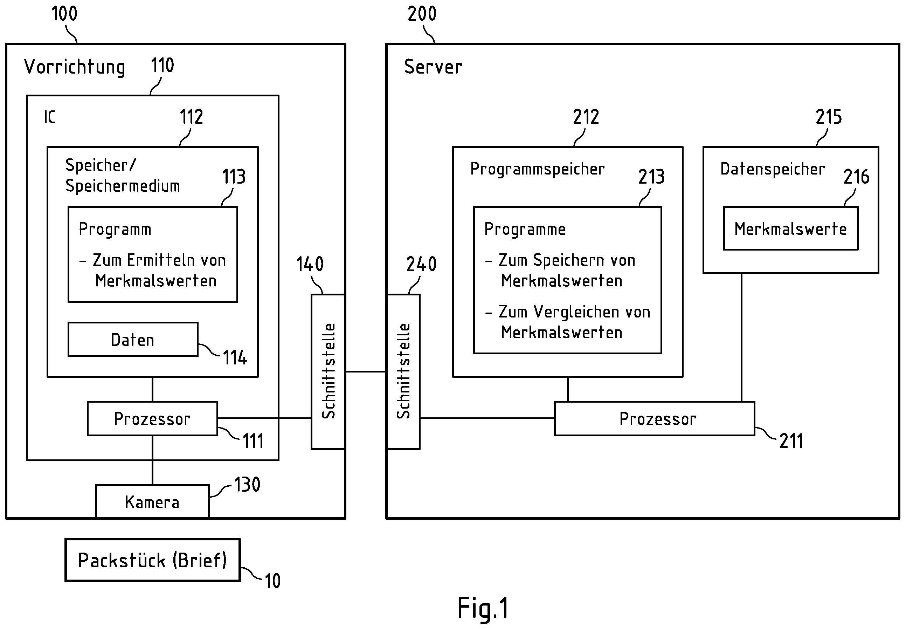

Figur 1 ist ein Blockdiagramm einer ersten beispielhaften Ausführungsform eines erfindungsgemäßen Systems, in dem Packstückidentifikationen erzeugt und genutzt werden. Es wird beispielhaft angenommen, dass es sich bei den Packstücken um Briefe handelt; andere Arten von Packstücken könnten aber in gleicher Weise identifiziert werden.

Das System umfasst eine beispielhafte Ausführungsform einer erfindungsgemäßen Vorrichtung 100 und einen Server 200.

Die Vorrichtung 100 umfasst einen Prozessor 111 und einen mit dem Prozessor 111 verbundenen Speicher 112. Der Prozessor 111 könnte ein Mikroprozessor sein. Er könnte auch in einen integrierten Schaltkreis (IC) 110 eingebettet sein, zum Beispiel zusammen mit dem Speicher 112. Der Speicher 112 ist oder umfasst ein Speichermedium, das ein Programm 113 mit Programmanweisungen speichert. Der Prozessor 111 ist dazu eingerichtet, um Programme aus dem Speicher 112 auszuführen und damit die Vorrichtung 100 zu veranlassen, bestimmte Aktionen auszuführen. Das Programm 113 ist ein Programm zum Ermitteln von Merkmalswerten. In dem Speicher 112 könnten ferner Daten 114 gespeichert werden. Es versteht sich, dass das Programm 113 oder Teile des Programms während der Abarbeitung durch den Prozessor 111 auch in einem (nicht dargestellten) Arbeitsspeicher zwischengespeichert werden können.

Die Vorrichtung 100 weist des Weiteren eine digitale Kamera auf 130. Die Kamera 130 ist ebenfalls mit dem Prozessor 111 verbunden. Die Vorrichtung 100 kann fest installiert sein, beispielsweise als Teil einer Sortieranlage. Die Kamera 130 ist dann so angeordnet, dass sie unter der Vorrichtung vorbeibeführte Briefe 10 fotografieren kann. Die Vorrichtung 100 kann alternativ mobil und tragbar sein. In dem Fall kann ein Nutzer, beispielsweise ein Bote, die Kamera 130 jeweils auf ein Packstück ausrichten und ein Fotografieren manuell auslösen. Statt einer Kamera könnte auch ein Scanner eingesetzt werden, der einen Brief scannt.

Die Vorrichtung 100 umfasst des Weiteren eine Schnittstelle 140 für einen Datenaustausch mit dem Server 200. Die Schnittstelle 140 ist ebenfalls mit dem Prozessor 111 verbunden. Es kann sich um eine Schnittstelle 140 für eine leitungsgebundene Verbindung oder um eine Funkschnittstelle handeln, die etwa von einem WLAN-, Bluetooth- oder Mobilfunkmodul bereitgestellt wird. Die Verbindung mit dem Server 200 kann optional zumindest teilweise über ein öffentliches Kommunikationsnetz, wie beispielsweise über ein Mobilfunknetz und/oder das Internet, erfolgen.

Die Vorrichtung 100 kann beliebige andere Komponenten aufweisen. Sie könnte beispielsweise eine Nutzerschnittstelle mit einem Bildschirm und einer Tastatur aufweisen, usw.

Der Server 200 umfasst einen Prozessor 211 und, mit dem Prozessor 211 verbunden, einen Programmspeicher 212, einen Datenspeicher 215 und eine Schnittstelle 240. Der Prozessor 211 könnte ein Mikroprozessor sein. Er könnte auch in einen integrierten Schaltkreis eingebettet sein, zum Beispiel zusammen mit dem Programmspeicher 212. Der Programmspeicher 212 speichert Programme 213 mit Programmanweisungen. Der Prozessor 210 ist dazu eingerichtet, um Programme aus dem Programmspeicher 212 auszuführen und damit den Server 200 zu veranlassen, bestimmte Aktionen auszuführen. Die Programme 213 umfassen ein Programm zum Speichern von erhaltenen Merkmalswerten und ein Programm zum Vergleichen von erhaltenen Merkmalswerten mit gespeicherten Merkmalswerten. Der Datenspeicher 215 speichert Merkmalswerte. Die Schnittstelle 240 ermöglicht einen Datenaustausch mit anderen Einrichtungen, wie der Vorrichtung 100.

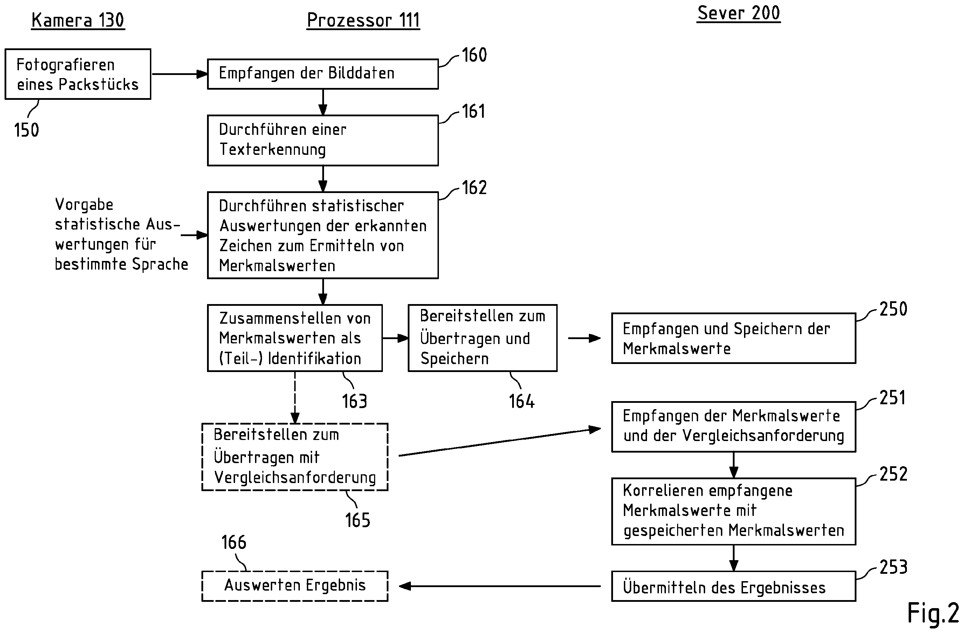

Figur 2 illustriert eine Operation des Systems aus Figur 1 als beispielhafte Ausführungsform eines erfindungsgemäßen Verfahrens. Die auf der linken Seite gezeigten Aktionen werden von der Kamera 130 der Vorrichtung 100 ausgeführt. Die in der Mitte gezeigten Aktionen werden ausgeführt, wenn der Prozessor 111 der Vorrichtung 100 das Programm 113 ausführt. Die auf der rechten Seite gezeigten Aktionen werden vom Server 200 ausgeführt, wenn der Prozessor 211 eines der Programme 213 aus dem Programmspeicher 212 ausführt.

Wenn ein Brief 10 im Erfassungsbereich der Kamera 130 angeordnet ist, fotografiert die Kamera 130 den Brief 10 und erfasst so seine Oberfläche optisch (Aktion 150). Das Fotografieren kann automatisch ausgelöst werden, wenn eine bestimmte Position des Briefes 10 bzw. einer Trägereinheit, auf der der Brief 10 befördert wird, erfasst wird. Das Fotografieren kann aber auch manuell durch einen Benutzer ausgelöst werden. Jeder Brief 10 könnte auch zweifach fotografiert werden, einmal die Vorderseite und einmal die Rückseite. Jedes Fotografieren resultiert in einem Satz Bilddaten.

Die Kamera 130 übermittelt die Bilddaten an den Prozessor 111.

Der Prozessor 111 empfängt die Daten (Aktion 160) und führt eine Mustererkennung durch, die zumindest eine Texterkennung umfasst (Aktion 161).

Wenn auf beiden Seiten des Briefes keinerlei Text erkannt wird, könnte eine Fehlermeldung ausgegeben werden.

Anderenfalls stehen als Ergebnis der Texterkennung nun einzelne Zeichen zur Verfügung, die Buchstaben, Zahlen, Satzzeichen, Sonderzeichen und andere Zeichen umfassen können.

Der Prozessor 111 unterzieht die erfassten Zeichen einer Reihe von statistischen Auswertungen (Aktion 162). Die Art der Auswertungen ist dabei vorgegeben. Jede Auswertung resultiert in einem Merkmalswert. Einige Auswertungen können dabei zum Beispiel die absolute oder relative Häufigkeit eines bestimmten Zeichens oder einer bestimmten Zeichenkombination ermitteln. So könnte für einen ersten Merkmalswert ermittelt werden, wie häufig der Buchstabe "e" in dem gesamten erkannten Text auftaucht, und für einen zweiten Merkmalswert, wie häufig die Kombination "st" in dem gesamten erkannten Text auftaucht, usw.

Ein jeweiliger Merkmalswert kann optional auch das Verhältnis einer relativen Häufigkeit eines Zeichens oder einer Zeichenkombination zu der Wahrscheinlichkeit, mit der dieses Zeichens oder diese Zeichenkombination auftritt, sein. Hierdurch können die Werte verschiedener Merkmale untereinander ähnlicher sein. Dies kann die Ergebnisse einer weiter unten diskutierten Korrelation aussagekräftiger machen.

Für verschiedene Sprachen können unterschiedliche statistische Auswertungen vorgegeben sein. Dadurch können zum Beispiel die in einer jeweiligen Sprache mit besonders hoher Wahrscheinlichkeit auftretende Zeichen und/oder Zeichenkombinationen berücksichtigt werden.

Die zu berücksichtigende Sprache kann einer Vorrichtung 100 als Parameter vorgegeben sein. So kann eine in einem bestimmten Land genutzte Vorrichtung 100 jeweils den Satz von statistischen Auswertungen nutzen, der für die Landessprache vorgesehen ist. Alternative kann eine Vorrichtung 100 zum Beispiel an einer Stelle in einem Sortiersystem angeordnet, an der speziell die Briefe aus einem bestimmten Herkunftsland durchlaufen. In dem Fall kann die Vorrichtung 100 jeweils den Satz von statistischen Auswertungen nutzen, der für die Landessprache aus dem Herkunftsland vorgesehen ist. Eine Vorrichtung 100 könnte anhand der Texterkennung jedoch auch selber auswerten, auf welcher Sprache die Struktur des erkannten Textes schließen lässt. So könnte die Anordnung einer Postleitzahl und/oder einer Hausnummer in einem Adressfeld auf ein bestimmtes Land und damit auf eine bestimmte Sprache schließen lassen.

Der Prozessor 111 stellt die ermittelten Merkmalswerte für einen Brief 10 zusammen, zum Beispiel in Form eines Merkmalsvektors (Aktion 163). Der Merkmalsvektor kann dabei eine Identifikation oder eine Teilidentifikation für den Brief 10 darstellen.

In einer ersten Variante stellt der Prozessor 111 die zusammengestellten Merkmalswerte zum Speichern bereit und veranlasst die Vorrichtung 100 die Merkmalswerte über die Schnittstelle 140 an den Server 200 zu übermitteln (Aktion 164). Es versteht sich, dass der Prozessor 111 auch zunächst die Merkmalswerte für eine Mehrzahl von Briefen generieren und in einem Speicher der Vorrichtung 100 speichern kann. Die Merkmalswerte können dann gebündelt an den Server 200 übermittelt werden, beispielsweise einmal pro Stunde.

Der Server 200 empfängt die Merkmalswerte über die Schnittstelle 240, und der Prozessor 211 veranlasst ein Speichern der Merkmalswerte im Datenspeicher 215, beispielsweise in Form eines Merkmalsvektors oder als Elemente einer Tabelle (Aktion 250).

Von anderen, ähnlichen Vorrichtungen kann der Server 200 ebenfalls Merkmalswerte erhalten und diese im Datenspeicher 215 speichern. Merkmalswerte können auch zusammen mit anderen Informationen über einen Brief 10 gespeichert werden, wie dem Gewicht, der Größe, der Adresse, Serviceangaben, einer vorgesehenen Beförderungskette, etc. Solche Informationen können von der Vorrichtung 100 oder von anderen Vorrichtungen geliefert werden. Sind die Merkmalswerte nur als Teilidentifikation vorgesehen, so können einige solcher zusätzlichen Informationen zusammen mit den Merkmalswerten eine vollständige Identifikation für den Brief 10 bilden.

In einer zweiten Variante veranlasst der Prozessor 111 die Vorrichtung 100, die Merkmalswerte zusammen mit einer Anforderung, diese mit gespeicherten Merkmalswerten abzugleichen, an den Server 200 zu übermitteln (Aktion 165). Die Vorrichtung 100 kann Programmanweisungen zum Ausführen der zweiten Variante mit Aktionen 165 und 166 alternativ oder zusätzlich zu Programmanweisungen zum Ausführen der ersten Variante mit Aktion 164 aufweisen. Daher sind die Aktionen 165 und 165 in Figur 2 mit gestrichelten Linien dargestellt.

Der Prozessor 211 des Servers 200 empfängt die Merkmalswerte und die Anforderung (Aktion 251) und führt eine Korrelation zwischen dem erhaltenen Satz von Merkmalswerten und allen oder ausgewählten, im Datenspeicher 215 gespeicherten Sätzen von Merkmalswerten durch (Aktion 252). Hierzu kann zum Beispiel für jedes Merkmal die Differenz zwischen dem erhaltenen Wert und dem gespeicherten Wert berechnet werden. Die Differenzen für alle Merkmale können dann aufsummiert werden, so dass sich ein Gesamtwert als Korrelationswert ergibt. Eine Vorabauswahl von gespeicherten Sätzen von Merkmalswerten könnte anhand von vorhandenen Parameterwerten erfolgen, beispielsweise einer Angabe über das Gewicht des Briefes, für den der Satz Merkmalswerte empfangen wurden.

Der Korrelationswert zeigt an, ob es einen identischen Satz gespeicherter Merkmalswerte gibt, oder ob es einen Satz Merkmalswerte mit geringfügigen Unterschieden gibt. Bei Unterschieden oberhalb eines vorgegebenen Korrelationswertes kann angenommen werden, dass es sich bei den verglichenen Merkmalswerten um die Merkmalswerte von unterschiedlichen Briefen handelt; und bei Unterschieden unterhalb eines vorgegebenen Korrelationswertes kann angenommen werden, dass es sich bei den verglichenen Merkmalswerten um die Merkmalswerte des gleichen Briefes handelt, wobei jedoch der Text auf dem Brief inzwischen geändert wurde.

Der Prozessor 211 veranlasst eine entsprechende Rückmeldung an die anfragende Vorrichtung 100 (Aktion 253).

Die Prozessor 111 der Vorrichtung 100 kann das Ergebnis auswerten und dann je nach Ergebnis reagieren (Aktion 166). Einerseits kann die Vorrichtung 100 bei identischen Merkmalswerten beispielsweise eine Verwaltungseinheit informieren, dass der Brief einen bestimmten Ort erreicht hat. Andererseits die Vorrichtung 100 bei einer festgestellten Änderung beispielsweise einen Boten auffordern, die Änderung zu überprüfen.

Es ergibt sich also bei beispielhaften Ausführungsformen der Erfindung die Möglichkeit, den Verlauf des Transports von Packstücken zu verfolgen und Veränderungen von Packstückeigenschaften im Verlauf des Transports zu registrieren. Beschädigungen oder Aufschriftveränderungen können identifiziert und bewertet werden. Veränderungen in der Aufschrift eines Packstücks können beispielsweise auf Manipulationen beruhen, aber auch auf Adresskorrekturen, Ergänzung von Dienstleistungswünschen oder Ähnlichem. Kann etwa eine Ergänzung von Dienstleistungswünschen durch manuelle Beschriftung automatisch erkannt werden, so kann sich ein erhebliches Rationalisierungspotential ergeben. Die gewonnene Information kann auch in einer Interaktion mit einem Kunden, beispielsweise dem Absender und/oder dem Adressaten, verwertet werden.

Die Blöcke 160-166 in Figur 2 können auch als Darstellung von funktionalen Modulen einer beispielhaften Ausführungsform eines erfindungsgemäßen Computerprogramms verstanden werden.

Die Vorrichtung 100 aus Figur 1 kann in vielfältiger Weise abgewandelt werden, sowohl durch das Weglassen von Komponenten wie auch durch das Hinzufügen von Komponenten. Hierdurch können sich weitere oder alternative Vorteile ergeben. In einer anderen beispielhaften Ausführungsform könnte die Vorrichtung 100 statt Prozessor 111 und Speicher 112 mit Computerprogramm 113 einen Schaltkreis umfassen, in dem entsprechende Funktionen hardwaremäßig implementiert sind. Anstelle der Vorrichtung 100 könnte auch der IC 110 oder ein funktionsmäßig entsprechender Schaltkreis als beispielhafte Ausführungsform einer erfindungsgemäßen Vorrichtung angesehen werden.

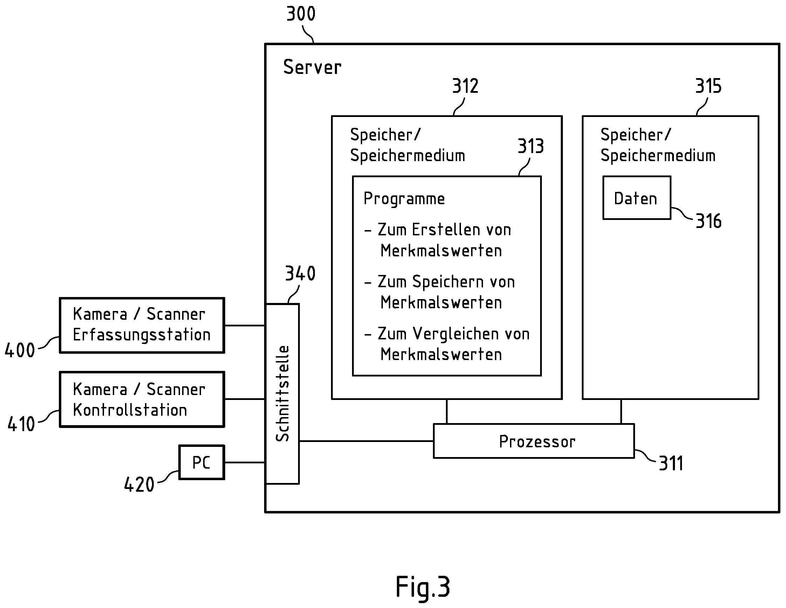

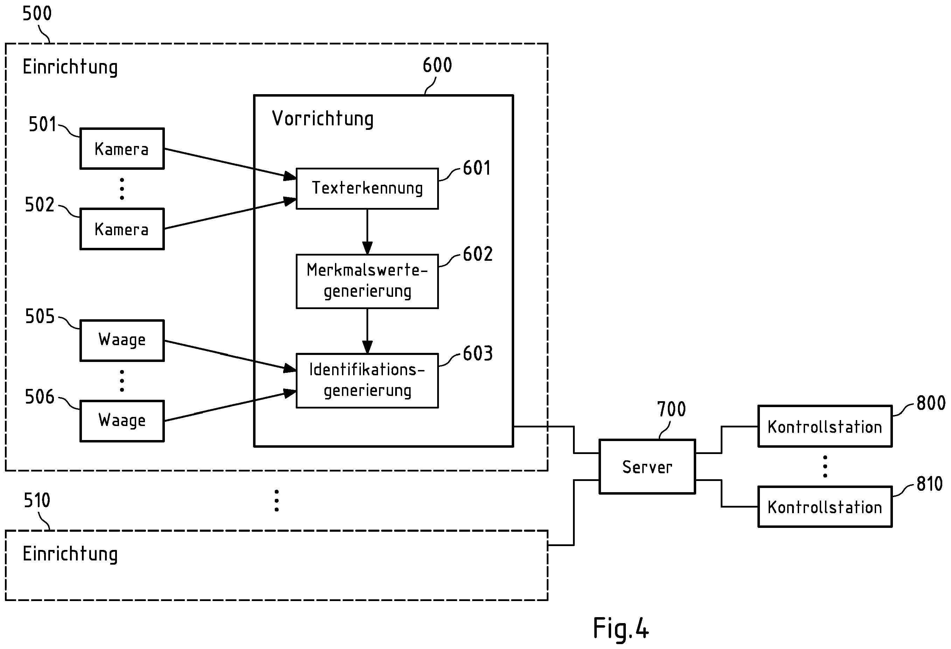

Auch das in Figur 1 präsentierte System als Ganzes kann in vielfältiger Weise abgewandelt werden. Figuren 3 und 4 präsentieren zwei beispielhafte Variationen des Systems.

Figur 3 ist ein Blockdiagramm einer zweiten beispielhaften Ausführungsform eines erfindungsgemäßen Systems.

Das System umfasst einen Server 300 als beispielhafte Ausführungsform einer erfindungsgemäßen Vorrichtung. Das System umfasst des Weiteren eine Mehrzahl von digitalen Kameras oder Scannern 400, 410 und einen Computer (PC) 420, die mit dem Server 300 direkt oder über mindestens ein Datennetz verbunden sind.

Der Server 300 umfasst einen Prozessor 311 und, mit dem Prozessor 311 verbunden, einen ersten Speicher 312, einen zweiten 315 und eine Schnittstelle 340. Der erste Speicher 312 ist oder umfasst ein Speichermedium, das Programme mit Programmanweisungen speichert. Der Prozessor 311 ist dazu eingerichtet, um Programme aus dem Programmspeicher 312 auszuführen und damit den Server 300 zu veranlassen, bestimmte Aktionen auszuführen. Die Programme umfassen Programme 313 zum Ermitteln von Merkmalswerten für Packstücken, zum Speichern von ermittelten Merkmalswerten von Packstücken und zum Vergleichen von ermittelten Merkmalswerten mit gespeicherten Merkmalswerten. Der zweite Speicher 315 ist oder umfasst ein Speichermedium, das Merkmalswerte für Packstücke und gegebenenfalls weitere Daten speichert, insbesondere weitere, bestimmten Packstücken zugeordnete Daten. Der Prozessor 311 könnte ein Zentralprozessor (Central Processing Unit, CPU) sein. Er könnte auch in einen integrierten Schaltkreis eingebettet sein, zum Beispiel zusammen mit dem ersten Speicher 312. Die Schnittstelle 340 ermöglicht einen Datenaustausch mit anderen Einrichtungen.

Die Kameras 400, 410 weisen neben herkömmlichen Komponenten für die Aufnahme von Bildern eine Schnittstelle für eine Datenkommunikation mit dem Server 300 auf. Einige der Kameras 400 können zu einer jeweiligen Erfassungsstation gehören und nur der ersten Ermittlung von Merkmalswerten für Packstücke dienen. Andere Kameras 410 können zu einer jeweiligen Kontrollstation gehören und Merkmalswerte für Packstücke an der Kontrollstation erneut generieren, damit diese mit gespeicherten Merkmalswerten verglichen werden können. Einige Kameras könnten aber auch zu beiden Zwecken vorgesehen sein.

Der Computer 420 weist ebenfalls eine Schnittstelle für eine Datenkommunikation mit dem Server 300 auf. Der Computer 420 erlaubt einen Zugriff auf Daten des Servers 300 und/oder ein automatisches Empfangen von Daten vom Server 300.

Eine Operation des Systems aus Figur 3 kann im Wesentlichen der in Figur 2 dargestellten Operation des Systems aus Figur 1 entsprechen. In diesem Fall werden die Bilddaten der Kameras 400, 410 jedoch direkt an einen Server 300 übermittelt, und der Server 300 übernimmt zusätzlich Aufgaben der Vorrichtung 100 aus Figur 1.

Werden am Server 300 Bilddaten von einer Kamera 400 einer Erfassungsstation empfangen, so veranlasst der Prozessor 311 den Server 300 Aktionen entsprechend den Aktionen 160-164 und 250 aus Figur 2 durchzuführen. Lediglich das Übertragen/Empfangen in Aktionen 164 und 250 entfällt, da alle Aktionen in einer Einheit, d.h. im Server 300, durchgeführt werden.

Werden am Server 300 Bilddaten von einer Kamera 410 einer Kontrollstation empfangen, so veranlasst der Prozessor 311 den Server 300 Aktionen entsprechend den Aktionen 160-163, 165 und 251-253 aus Figur 2 durchzuführen. In dem Fall entfällt das Übertragen/Empfangen in Aktionen 165 und 251. Außerdem könnten die Ergebnisse in Aktion 253 automatisch an den Computer 420 übermittelt werden. Optional könnte aber auch eine Übertragung der Ergebnisse an die Kamera 410 erfolgen, wenn die Kamera 410 dazu ausgebildet ist, die Ergebnisse auszuwerten.

Wenn die Kamera 410 zusätzlich aktuelle Koordinaten oder aber eine Identifizierung einer festen Kontrollstation an den Server 300 mitliefert, so könnte der Server zusätzlich die Koordinaten oder die Identifizierung der Kontrollstation als aktuelle Position des Packstücks abspeichern und bereitstellen.

Bestimmte Kontrollstationen könnten auch dazu ausgebildet sein, mit der Übermittlung der Bilddaten zu fordern, entsprechende Merkmalswerte in dem Datenspeicher 315 zu löschen oder als erledigt zu markieren, etwa auf eine Eingabe durch einen Boten hin, wenn ein Packstück abgeliefert wurde. Derart markierte Merkmalswerte brauchen dann bei künftigen Korrelationen gemäß Aktion 252 nicht mehr berücksichtigt werden.

Der Computer 420 könnte auch so implementiert sein, dass er es einem Nutzer erlaubt, Daten vom Server 300 abzurufen, beispielsweise um festzustellen, wie viele Sätze von Merkmalen zurzeit aktiv sind. Ein Satz Merkmale kann dabei beispielsweise als aktiv angesehen werden, solange sich das entsprechende Packstück im Verantwortungsbereich eines Logistikunternehmens befindet.

Figur 4 ist ein Blockdiagramm einer dritten beispielhaften Ausführungsform eines erfindungsgemäßen Systems.

Das System umfasst eine Mehrzahl von Einrichtungen 500, 510, beispielsweise Sortieranlagen, einen Server 700 und eine Mehrzahl von Kontrollstationen 800, 810.

Der Server 700 umfasst einen Speicher zum Speichern von Identifikationen von Packstücken. Der Server 700 ist mit den Einrichtungen 500, 510 und mit den Kontrollstationen 800, 810 für einen Datenaustausch verbindbar.

Jede der Einrichtungen 500 umfasst eine Mehrzahl von Kameras 501, 502 und eine Mehrzahl von anderen Erfassungseinheiten 505, 506, beispielsweise Waagen. Jede der Einrichtungen 500 umfasst des Weiteren eine beispielhafte Ausführungsform einer erfindungsgemäßen Vorrichtung 600. Jede der Kameras 501, 502 kann Packstücke optisch erfassen und die Bilddaten an die Vorrichtung 600 weiterleiten. Jede der weiteren Erfassungseinheiten 505, 506 kann weitere Informationen über die Packstücke, beispielsweise das Gewicht, erfassen und die Informationen an die Vorrichtung 600 weiterleiten. Die Mehrzahl von Kameras 501, 502 und anderen Erfassungseinheiten 505, 506 kann beispielsweise vorgesehen sein, um eine Vielzahl von Packstücken verarbeiten zu können und/oder um verschiedene Arten von Packstücken separat verarbeiten zu können und/oder um Packstücke mit unterschiedlicher Herkunft separat verarbeiten zu können, usw.

Die Vorrichtung 600 umfasst Mittel zur Texterkennung 601, Mittel zur Merkmalswertegenerierung 602 und Mittel zur Identifikationsgenerierung 603. Die Mittel zur Texterkennung 601 erhalten Bilddaten von den Kameras 501, 502 und extrahieren einzelne Zeichen aus den Daten für ein jeweiliges Packstück. Die Mittel zur Merkmalswertegenerierung 602 ermitteln Merkmalswerte basierend auf statistischen Auswertungen der Zeichen für ein jeweiliges Packstück. Die Mittel zur Identifikationsgenerierung 603 erhalten zum einen Merkmalswerte für ein bestimmtes Packstück von den Mitteln 602 und zum anderen weitere Informationen zu diesem Packstück von mindestens einer weiteren Erfassungseinheit 505, 506. Die Mittel zur Identifikationsgenerierung 603 fügen die erhaltenen Informationen zu einer Identifikation für das Packstück zusammen. Die Identifikation für ein jeweiliges Packstück wird an den Server 700 übermittelt, der die Identifikation speichert. Der Server 700 erhält und speichert außerdem entsprechende Identifikationen von anderen Einrichtungen 510. Die Übermittlung an den Server 700 kann eine Aufforderung enthalten, die Identifikation zu speichern. Alternativ kann beispielsweise eine Kennung der Vorrichtung 600 übermittelt werden, anhand derer der Server 700 ableiten kann, dass die Identifikation gespeichert werden soll.

Die Kontrollstationen 800, 810 können stationär oder mobil sein. Jede der Kontrollstationen 800, 810 umfasst eine Kamera, mindestens eine weitere Erfassungseinheit zum Erfassen einer weiteren Information über ein Packstück, Mittel zur Texterkennung, Mittel zur Merkmalswertegenerierung und Mittel zur Identifikationsgenerierung. Eine Kontrollstation 800, 810 generiert eine Identifikation für ein jeweiliges Packstück in ähnlicher Weise wie die Vorrichtung 600 und übermittelt die Identifikation an den Server 700. In diesem Fall wird die Identifikation zusammen mit einer Vergleichsanforderung übermittelt. Alternativ kann beispielsweise eine Kennung der Kontrollstation 800, 810 übermittelt werden, anhand derer der Server 700 automatisch ableiten kann, dass ein Vergleich einer übermittelten Identifikation durchgeführt werden soll. Der Server 700 vergleicht daraufhin die erhaltene Identifikation mit den gespeicherten Identifikationen und informiert die Kontrollstation 800, 810 oder eine andere, vorgegebene Einheit über das Ergebnis. Als Ergebnis kommt wiederum infrage, dass keine Übereinstimmung gefunden wurde, dass eine identische Identifikation gefunden wurde oder dass eine ähnliche Identifikation gefunden wurde, die auf eine Modifikation eines Packstücks schließen lässt.

Eine Identifikation von Packstücken basierend auf statistischen Auswertungen kommt nicht nur als Alternative zu einer Identifikation mittels Barcode in Betracht, sondern auch als Ergänzung einer Identifikation mittels Barcode oder einer anderen eigenständigen Identifikation. In einer beispielhaften Ausführungsform könnten die auf statistischen Auswertungen basierenden Merkmalswerte parallel zu einer anderen Identifikation genutzt werden. In einer weiteren beispielhaften Ausführungsform könnten die auf statistischen Auswertungen basierenden Merkmalswerte hauptsächlich genutzt werden, um Änderungen in der Aufschrift auf einem Packstück festzustellen. Ein Satz Merkmalswerte könnte in diesen Fällen jeweils zusammen mit einem Barcode-Wert oder einer anderen Identifikation gespeichert werden.

Die dargestellten oder beschriebenen Verbindungen zwischen Komponenten sind in sämtlichen Ausführungsformen als funktionale Verbindungen zu verstehen. Sie können direkt oder indirekt über mehrere andere Komponenten realisiert werden. Sie können leitungsgebunden und/oder drahtlos sein. Sie können permanent vorhanden oder jeweils bei Bedarf einrichtbar sein. Die Abfolge der geschilderten Aktionen ist nicht zwingend; alternative Abfolgen der Verfahrensschritte sind denkbar. Die Aktionen können auf verschiedene Art und Weise implementiert werden; so ist eine Implementierung nicht nur in Software (durch Programmanweisungen), sondern auch nur in Hardware oder in einer Kombination von beidem denkbar.

Es versteht sich, dass die beschriebenen Ausführungsformen lediglich Beispiele sind, die im Rahmen der Ansprüche auf vielfältige Weise modifiziert und/oder ergänzt werden können. Insbesondere kann jedes Merkmal, das für ein bestimmtes Ausführungsbeispiel beschrieben wurde, eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

## Patentansprüche

1. Verfahren ausgeführt von mindestens einer Vorrichtung (100, 110; 300; 600, 800), das Verfahren umfassend:
- Erhalten von Daten, die aus einer optischen Erfassung mindestens einer Oberfläche eines Packstücks (10) resultieren;
- Durchführen einer Texterkennung basierend auf den erhaltenen Daten zum Erkennen von einzelnen Zeichen;
- Ermitteln einer Mehrzahl von Merkmalswerten als zumindest einen Teil einer Identifikation des Packstücks, wobei jeder Merkmalswert auf einer anderen vorgegebenen statistische Auswertung der erkannten Zeichen basiert; und
- Bereitstellen der Merkmalswerte zum Speichern der Merkmalswerte und/oder zum Vergleichen der Merkmalswerte mit zuvor gespeicherten Merkmalswerten.

2. Verfahren gemäß Anspruch 1, wobei mindestens eine der statistischen Auswertungen Folgendes umfasst:
- eine Bestimmung einer Häufigkeit eines bestimmten Zeichens; und/oder
- eine Bestimmung einer Häufigkeit einer bestimmten Kombination von Zeichen; und/oder
- eine Bestimmung einer Häufigkeit eines bestimmten Zeichens an einer bestimmten Stelle.

3. Verfahren gemäß Anspruch 1 oder 2, wobei die vorgegebenen statistischen Auswertungen der erkannten Zeichen basierend auf mindestens einer der folgenden Wahrscheinlichkeiten ausgewählt werden:
- einer Wahrscheinlichkeit eines Auftretens eines bestimmten Zeichens;
- einer Wahrscheinlichkeit eines Auftretens einer bestimmten Kombination von Zeichen; und
- einer Wahrscheinlichkeit eines Auftretens eines bestimmten Zeichens an einer bestimmten Stelle.

4. Verfahren gemäß einem der Ansprüche 1 bis 3, wobei für verschiedene Sprachen und/oder Sprachgruppen unterschiedliche statistische Auswertungen erkannter Zeichen vorgegeben sind, wobei die vorgegebenen statistischen Auswertungen der erkannten Zeichen für eine jeweilige Sprache und/oder Sprachgruppe auf statistischen Auswertungen der Sprache und/oder Sprachgruppe basieren, und wobei die Mehrzahl von Merkmalswerten jeweils basierend auf für eine Sprache und/oder Sprachgruppen vorgegebenen statistischen Auswertungen der erkannten Zeichen ermittelt werden.

5. Verfahren gemäß Anspruch 4, wobei die Sprache oder Sprachgruppe bestimmt wird basierend auf:
- einer geometrischer Verteilung bestimmter erkannter Zeichen; und/oder
- einer Präsenz bestimmter Zeichen; und/oder
- einer Information über den Herkunftsort des Packstücks.

6. Verfahren gemäß einem der Ansprüche 1 bis 5, ferner umfassend die vorangehende optische Erfassung der mindestens einen Oberfläche des Packstücks (10).

7. Verfahren gemäß einem der Ansprüche 1 bis 6, wobei die optische Erfassung ein Scannen der mindestens einen Oberfläche des Packstücks (10) oder ein Fotografieren der mindestens einen Oberfläche des Packstücks (10) umfasst.

8. Verfahren gemäß einem der Ansprüche 1 bis 7, ferner umfassend Vergleichen der ermittelten Merkmalswerte mit zuvor für Packstücke ermittelten und gespeicherten Merkmalswerten, indem die ermittelten Merkmalswerte korreliert werden mit gespeicherten Merkmalswerten, um eine Übereinstimmung und/oder Abweichungen festzustellen.

9. Vorrichtung (100; 300; 600) umfassend Mittel (111, 112, 113; 311, 312, 313; 601, 602, 603) zur Ausführung des Verfahrens gemäß einem der Ansprüche 1 bis 8.

10. Vorrichtung (100) gemäß Anspruch 9, die mindestens eine der folgenden Komponenten umfasst:
- einen Prozessor (111);
- einen Speicher (113);
- eine Schnittstelle für eine Datenkommunikation (140);
- einen Scanner; und
- eine Kamera (130).

11. System umfassend mindestens eine Vorrichtungen (300; 600) gemäß Anspruch 9 oder 10 und mindestens einen Scanner zur optischen Erfassung einer Oberfläche von Packstücken und/oder mindestens eine Kamera (400; 501) zur optischen Erfassung einer Oberfläche von Packstücken.

12. Programm (313) umfassend
- Programmanweisungen, wobei die Programmanweisungen bei Ausführung durch einen Prozessor (311) eine Vorrichtung (300) zur Ausführung des Verfahrens gemäß einem der Ansprüche 1 bis 8 veranlassen.

13. Speichermedium (312), das ein Programm (313) gemäß Anspruch 12 speichert.

## Claims

1. Method implemented by at least one device (100, 110; 300; 600, 800), the method comprising:
- acquiring data resulting from an optical detection of at least one surface of a package (10);
- implementing a text recognition based on the acquired data for recognising individual characters;
- determining a plurality of characteristic values as at least one part of an identification of the package, wherein each characteristic value is based on another predetermined statistical analysis of the recognised characters; and
- providing the characteristic values to be stored and/or compared with previously stored characteristic values.

2. Method according to Claim 1, wherein at least one of the statistical analyses comprises the following:
- determining a frequency of a particular character; and/or
- determining a frequency of a particular combination of characters; and/or
- determining a frequency of a particular character in a particular place.

3. Method according to Claim 1 or 2, wherein the predetermined statistical analyses of the recognised characters are selected based on at least one of the following probabilities:
- a probability of the appearance of a particular character;
- a probability of the appearance of a particular combination of characters; and
- a probability of the appearance of a particular character in a particular place.

4. Method according to any one of Claims 1 to 3, wherein different statistical analyses of recognised characters are predetermined for different languages and/or language groups, wherein the predetermined statistical analyses of the recognised characters for a respective language and/or language group are based on statistical analyses of the language and/or language group and wherein the plurality of characteristic values are determined based in each case on statistical analyses of the recognised characters which have been predetermined for a language and/or language groups.

5. Method according to Claim 4, wherein the language or language group is determined based on:
- a geometric distribution of particular recognised characters; and/or
- the presence of a particular character; and/or
- information about the place of origin of the package.

6. Method according to any one of Claims 1 to 5, further comprising the previous optical detection of the at least one surface of the package (10).

7. Method according to any one of Claims 1 to 6, wherein the optical detection comprises scanning the at least one surface of the package (10) or photographing the at least one surface of the package (10).

8. Method according to any one of Claims 1 to 6, further comprising comparing the determined characteristic values with previously determined and stored characteristic values by correlating the determined characteristic values with stored characteristic values to establish a match and/or differences.

9. Device (100; 300; 600) comprising means (111, 112, 113; 311, 312, 313; 601, 602, 603) for implementing the method according to any one of Claims 1 to 8.

10. Device (100) according to Claim 9 which comprises at least one of the following components:
- a processor (111);
- a memory (113);
- an interface for data communication (140);
- a scanner; and
- a camera (130).

11. System comprising at least one device (300; 600) according to Claim 9 or 10 and at least one scanner for optically detecting a surface of packages and/or at least one camera (400; 501) for optically detecting a surface of packages.

12. Program (313) comprising
- program commands, wherein the program commands, when executed by a processor (311), prompt a device (300) to implement the method according to any one of Claims 1 to 8.

13. Storage medium (312) which stores a program (313) according to Claim 12.

## Revendications

1. Procédé exécuté par au moins un dispositif (100, 110 ; 300 ; 600, 800), le procédé comprenant :
- réception de données, qui résultent d'une saisie optique d'au moins une surface d'un paquet (10),
- exécution d'une reconnaissance de texte pour la reconnaissance de signes individuels, sur la base des données reçues
- détermination d'une pluralité de valeurs caractéristiques en tant qu'au moins une partie d'une identification du paquet, sachant que chaque valeur caractéristique est basée sur une autre évaluation statistique prédéterminée des signes reconnus, et
- mise à disposition des valeurs caractéristiques pour la mémorisation des valeurs caractéristiques et / ou pour la comparaison des valeurs caractéristiques avec des valeurs caractéristiques mémorisées auparavant.

2. Procédé selon la revendication 1, sachant qu'au moins l'une des évaluations statistiques comprend ce qui suit :
- une détermination d'une fréquence d'un signe défini et / ou
- une détermination d'une fréquence d'une combinaison de signes définie et / ou
- une détermination d'une fréquence d'un signe défini à un endroit défini.

3. Procédé selon revendication 1 ou 2, sachant que les évaluations statistiques prédéterminées des signes reconnus sont choisies sur la base d'au moins l'une des probabilités suivantes :
- une probabilité d'une apparition d'un signe défini,
- une probabilité d'une apparition d'une combinaison de signes définie,
et
- une probabilité d'une ap- parition d'un signe défini à un endroit défini.

4. Procédé selon l'une des revendications 1 à 3, sachant que, pour différentes langues et / ou différents groupes de langues, différentes évaluations statistiques de signes reconnus sont prédéterminées, sachant que les évaluations statistiques, prédéterminées de signes reconnus sont basées pour une langue ou pour un groupe de langues respective sur des évaluations statistiques de la langue et / ou du groupe de langues, et sachant que la majorité des valeurs caractéristiques sont déterminées sur la base des évaluations statistiques, prédéterminées des signes reconnus pour une langue et / ou pour des groupes de langues.

5. Procédé selon la revendication 4, sachant que la langue et / ou le groupe de langues sont déterminés sur la base
- d'une répartition géométrique de signes définis, reconnus et / ou
- de la présence de signes définis, et / ou
- d'une information sur le lieu de provenance du paquet.

6. Procédé selon l'une des revendications 1 à 5, comprenant de plus la saisie optique préalable d'au moins une surface du paquet (10).

7. Procédé selon l'une des revendications 1 à 6, sachant que la saisie optique comprend un scannage d'au moins une surface du paquet (10) ou une photographie d'au moins une surface du paquet (10).

8. Procédé selon l'une des revendications 1 à 7, comprenant de plus la comparaison des valeurs caractéristiques déterminées avec des valeurs caractéristiques déterminées et mémorisées auparavant pour des paquets, en établissant une corrélation entre les valeurs caractéristiques déterminées et les valeurs caractéristiques mémorisées, afin de constater une concordance et / ou une divergence.

9. Dispositif (100; 300; 600), qui comprend des moyens (111, 112, 113 ; 311, 312, 313 ; 601, 602, 603) pour l'exécution du procédé selon les revendications 1 à 8.

10. Dispositif (100) selon la revendication 9, qui comprend au moins l'un des composants suivants :
- un processeur (111),
- une mémoire (113),
- une interface pour une communication de données (140),
- un scanneur et
- une caméra (130).

11. Système comprenant au moins un dispositif (300 ; 600) selon revendication 9 ou 10 et au moins un scanneur, pour la saisie optique d'une surface de paquet, et au moins une caméra (400 ; 501) pour la saisie optique d'une surface de paquets.

12. Programme (313), comprenant
- des instructions de programme, sachant que les instructions de programme, lors de l'exécution par un processeur (311), incitent un dispositif (300) à exécuter le procédé selon l'une des revendications 1 à 8.

13. Support de mémorisation (32), qui mémorise un programme (313) selon la revendication 12.
